# FASCICULE DE BREVET EUROPEEN

(11) **EP 3 489 766 B1**
(45) Date de publication et mention de la délivrance du brevet: **05.11.2025**
(21) Numéro de dépôt: 17203880.4
(22) Date de dépôt: 27.11.2017
(51) Int. Cl.: G04B 27/00

(54) **MÉCANISME DE CORRECTION D'UNE FONCTION D'UN MOUVEMENT D'UNE PIÈCE D'HORLOGERIE**
MECHANISMUS ZUR KORREKTUR EINER BEWEGUNGSFUNKTION EINER UHR
MECHANISM FOR CORRECTING A FUNCTION OF A TIMEPIECE MOVEMENT

(43) Date de publication de la demande: 29.05.2019
(73) Titulaire: Montres Breguet S.A., 1344 L'Abbaye (CH)
(72) Inventeur: ROCHAT, Fabrice, 1337 Vallorbe (CH); LENOIR, Deirdré, 1030 Bussigny (CH)
(74) Mandataire: ICB SA

(56) Documents cités:
- EP-A1- 2 159 652
- EP-A1- 2 672 335
- EP-A1- 2 950 164
- CH-A2- 708 741

## Description

### Domaine de l'invention

L'invention se porte sur un mécanisme de correction d'une fonction d'un mouvement d'une pièce d'horlogerie et un correcteur compris dans ce mécanisme.

L'invention porte aussi sur ce mouvement pourvu d'un tel mécanisme et également sur la pièce d'horlogerie comportant ce mouvement.

### Arrière-plan de l'invention

Dans l'état de la technique, il est souvent nécessaire d'effectuer des corrections de fonctions dans des mouvements de pièces d'horlogerie, en particulier des fonctions d'affichage telles qu'un quantième (annuel, perpétuel, jour/date, ou autre), ou des indicateurs de phase de lune, de marée, d'affichage AM/PM, ou autres. De telles corrections de fonctions sont classiquement réalisées à partir d'un mécanisme de correction mettant en général en œuvre une tige de remontoir. Toutefois de telles corrections de fonctions sont souvent impossibles ou trop lentes à effectuer à partir d'un tel mécanisme.

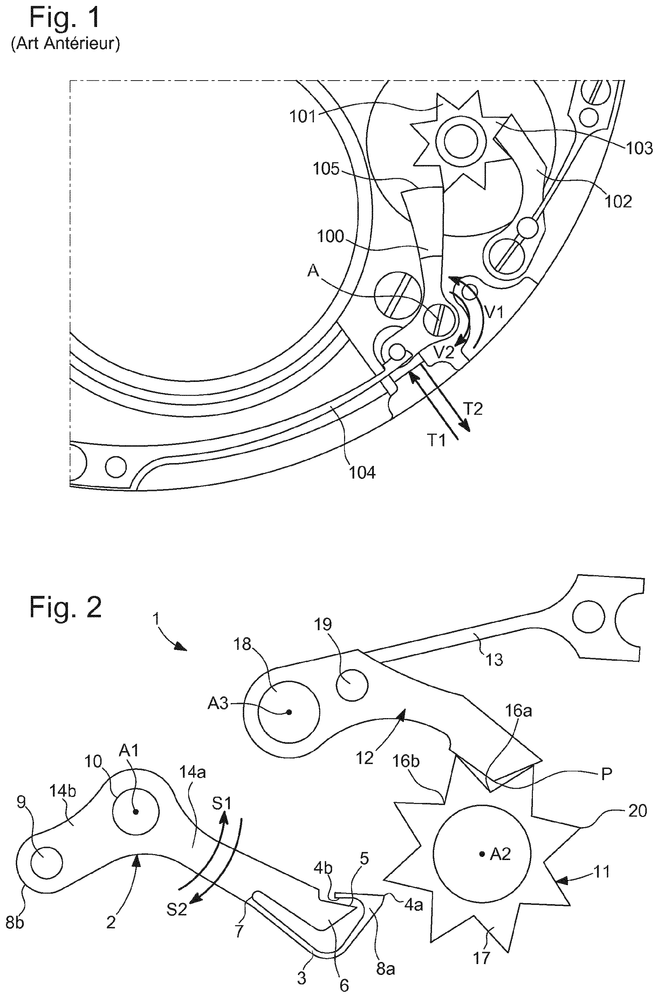

Pour pallier ces inconvénients, on connaît également d'autres mécanismes de correction visibles sur la figure 1 et qui comprennent généralement un poussoir monté librement dans une carrure d'une boite de la pièce d'horlogerie et qui est relié mécaniquement à un correcteur 100 ainsi qu'un sautoir 102 prévu pour maintenir une roue dentée 101 autrement appelée étoile dans une position indexée. Dans cette configuration, lors d'une correction, le poussoir qui est déplaçable dans la carrure selon deux sens de déplacement T1, T2 opposés, est actionné afin d'agir de manière directe ou indirecte sur le correcteur 100 afin que ce dernier effectue un mouvement de rotation autour d'un axe de rotation A dans un premier sens V1 en comprimant un ressort de correcteur 104 fixé au corps de ce correcteur 100, ou fixé ailleurs dans le mouvement, sur une course angulaire limitée par deux butées. Lors de cette rotation dans le premier sens V1, ce correcteur 100 est apte à entrainer dans un déplacement en rotation la roue dentée 101 qui est indexée par le sautoir 102 agencé dans un premier creux de cette roue 101 défini entre deux dents de cette dernière et ce, jusqu'à ce que le correcteur 100 entre en contact avec l'une des deux butées.

Plus précisément, un tel correcteur 100 est pourvu d'une extrémité libre 105 rigide de transmission d'un mouvement qui est prévue pour entrer en contact avec une dent de cette roue dentée 101 de sorte à entrainer un déplacement en rotation de cette dernière. Lors de cette rotation cette extrémité 105 présente une course suffisante pour positionner une pente de la tête du sautoir 102 sur un sommet d'une dent de la roue 101 délimitant le premier creux d'un deuxième creux de cette roue 101 et ce, afin que ce sautoir 102 soit en position pour finaliser cette fonction de correction en venant entrainer à son tour la roue 101 afin d'être agencée dans le deuxième creux pour verrouiller cette roue 101 dans une position indexée finale de correction dès que le poussoir est relâché.

Cependant, un tel mécanisme correcteur 100 manque souvent de robustesse en raison du caractère aléatoire de la réalisation de la correction attendue. En effet, il est courant que la roue dentée ne soit pas configurée dans sa position indexée finale du fait par exemple que le sautoir 102 n'arrive pas à vaincre des couples résistants de la roue dentée liés par exemple à des frottements ou alors du fait d'une pente faible du sautoir 102 prévue pour éviter des effets dynamiques indésirables. Dans ces conditions, dès lors que le poussoir est relâché, le ressort de correcteur exerce alors une force de rappel sur le correcteur 100 afin que son extrémité ne soit plus engagée avec la dent de la roue dentée provoquant ainsi un mouvement de rotation de la roue dans un deuxième sens V2 opposé au premier sens ce qui a pour effet de configurer cette roue 101 à nouveau dans sa position indexée initiale.

EP 2 159 652 A1 divulgue un correcteur avec une extrémité flexible et un organe élastique comprenant une zone de contact extérieure transmettant un mouvement à un composant d'un mouvement horloger. CH 708 741 A2 divulgue un correcteur avec une extrémité flexible, un organe élastique apte à se déformer dans deux sens opposés, une première zone de contact extérieure transmettant un mouvement, et une deuxième zone de contact intérieure prévue pour venir en butée contre une zone d'appui d'une partie rigide du correcteur.

### Résumé de l'invention

Le but de la présente invention est de pallier en tout ou partie les inconvénients cités précédemment en proposant un mécanisme de correction comprenant un correcteur permettant de configurer à lui seul la roue dentée dans sa position finale d'indexation.

A cet effet, l'invention porte sur un correcteur selon la revendication 1.

La présence d'un tel organe élastique à l'extrémité libre flexible du correcteur contribue à augmenter sa course de déplacement qui est ainsi bien supérieure à celle des correcteurs de l'état de la technique notamment des correcteurs rigides. Dans ces conditions, le correcteur est alors apte à passer de sa position finale de butée à sa position initiale de butée sans engendrer de déplacement d'une pièce horlogère telle qu'une roue dentée alors dans une position finale d'indexation et avec laquelle il est apte à coopérer pour participer à la correction d'une ou de plusieurs fonctions du mouvement de la pièce d'horlogerie.

Dans d'autres modes de réalisation :
- ledit organe élastique est relié mécaniquement à une première partie du correcteur uniquement en son extrémité de liaison ;
- le correcteur comprend une extrémité de fixation pourvue d'une zone de liaison reliée mécaniquement à un ressort de correcteur du mécanisme de correction, et
- le correcteur comprend une zone de montage traversée par un axe de rotation autour duquel le correcteur est apte à se déplacer dans des premier et deuxième sens de déplacement.

L'invention porte aussi sur un mécanisme de correction d'une fonction d'un mouvement pour une pièce d'horlogerie notamment d'une fonction d'affichage, comprenant un tel correcteur et au moins une pièce horlogère notamment une roue dentée, ladite pièce horlogère étant susceptible d'être animée d'un mouvement en coopérant avec une extrémité flexible de transmission d'un mouvement du correcteur.

Avantageusement, ce mécanisme de correction comprend un sautoir apte à maintenir la pièce horlogère dans une position indexée.

L'invention porte également sur un mouvement pour une pièce d'horlogerie comportant au moins un tel mécanisme de correction.

L'invention porte aussi sur une pièce d'horlogerie comprenant un tel mouvement.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue d'un mécanisme de correction d'une fonction d'une pièce d'horlogerie de l'art antérieur ;
- la figure 2 est une vue d'un mécanisme de correction d'une fonction d'une pièce d'horlogerie dans une phase de repos de ce mécanisme selon un mode de réalisation de l'invention ;
- la figure 3 est une vue du mécanisme de correction d'une fonction d'une pièce d'horlogerie dans une phase d'activation de ce mécanisme selon le mode de réalisation de l'invention ;
- les figures 4 et 5 sont des vues du mécanisme de correction d'une fonction d'une pièce d'horlogerie en cours de configuration de la phase d'activation vers la phase de repos du mécanisme selon le mode de réalisation de l'invention, et

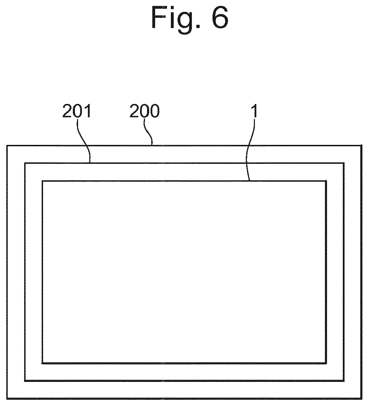

- la figure 6 est une représentation schématique d'une pièce d'horlogerie comprenant un mouvement pourvu d'un tel mécanisme de correction selon le mode de réalisation de l'invention.

### Description détaillée des modes de réalisation préférés

L'invention concerne le domaine des mécanismes d'horlogerie, et plus particulièrement des mécanismes de correction 1 d'une ou de plusieurs fonctions d'un mouvement 201 d'une pièce d'horlogerie 200 telle qu'une montre. Ces mécanismes 1 peuvent être commandés par l'utilisateur de la pièce d'horlogerie 200 ou encore être pilotés de manière automatique par un mécanisme d'entraînement automatique commandé par le mouvement 201 de la pièce d'horlogerie 200.

Dans le présent mode de réalisation de l'invention, de telles fonctions peuvent consister en particulier en des fonctions d'affichage telles qu'un quantième (annuel, perpétuel, jour/date, ou autre), ou des indicateurs de phase de lune, de marée, d'affichage AM/PM, ou autres. Dans ce contexte, de tels mécanismes de correction 1 visent à corriger et mettre à jour des mécanismes d'affichage pouvant coopérer alors avec au moins un de ces mécanismes de correction 1 dans le cadre de la correction d'une fonction d'affichage. Bien évidemment, ces fonctions corrigées peuvent correspondre à d'autres fonctions du mouvement 201 qui sont différentes de fonctions d'affichage.

Sur les figures 2 à 5, ce mécanisme de correction 1 comprend de manière non limitative et non exhaustive un poussoir, un correcteur 2, un sautoir 12, une pièce horlogère 11 telle qu'une roue dentée, un ressort de correcteur (non représenté) et un ressort de sautoir 13. Dans ce mécanisme de correction 1, le poussoir autrement appelé *« poussoir-correcteur »* est monté mobile dans une carrure d'une boite de la pièce d'horlogerie 200. Ce poussoir est prévu pour être actionné manuellement par exemple par l'utilisateur de la pièce d'horlogerie 200 au niveau d'une zone d'activation (non représentée) visible de la carrure et ce, le nombre de fois qu'il est nécessaire pour corriger cette fonction d'affichage. Ce poussoir est relié directement au correcteur 2 ou encore indirectement via une chaîne cinématique du mécanisme de correction 1 afin d'engendrer un déplacement du correcteur 2 dans un premier sens de déplacement P1 (visible sur la figure 2) autour d'un axe de rotation A1 lorsque ce poussoir est actionné.

Dans ce mécanisme de correction 1, le correcteur 2 comprend une zone de montage 10 contribuant à assurer sa fixation de manière mobile sur une platine de la pièce d'horlogerie 200. Cette zone de montage 10 relie des première et deuxième parties 14a, 14b entre elles de manière à ce que le correcteur 2 ait une forme essentiellement similaire à celle de la lettre « L ». Cette zone de montage 10 comprend une ouverture qui est susceptible d'être traversée par une vis dont une extrémité filetée est apte à coopérer avec un orifice taraudé de la platine. Ainsi ce correcteur 2 est donc mobile en déplacement par rapport à l'axe de rotation A1 qui est perpendiculaire à cette ouverture de la zone de montage 10. Ce correcteur 2 comprend en plus de cette zone de montage 10, une extrémité de fixation 8b comprise dans la deuxième partie 14b de ce correcteur 2 et une extrémité libre flexible de transmission 8a d'un mouvement ici d'un mouvement de rotation, située dans la première partie 14a de ce correcteur 2. Dans cette configuration, on comprend que la zone de montage 10 est comprise entre ces deux extrémités 8a, 8b.

Dans ce correcteur 2, l'extrémité libre flexible de transmission 8a d'un mouvement appelé par la suite extrémité flexible de transmission d'un mouvement, comporte un organe élastique 3. Cet organe élastique 3 correspond à une partie flexible en particulier à la seule partie flexible du correcteur 2 qui est spécifiquement définie pour transmettre un mouvement à la roue dentée 11. Cet organe élastique 3 comprend des première et deuxième zones de contact 4a, 4b. La première zone de contact 4a est définie sur une surface extérieure dudit organe élastique 3 et participe à la transmission du mouvement à la roue dentée 11 du mécanisme de correction 1. La deuxième zone de contact 4b est quant à elle, définie sur une surface intérieure dudit organe élastique 3. Cette deuxième zone de contact 4b est prévue pour venir en butée contre une zone d'appui 5 comprise dans une partie rigide 6 de la première partie 14a dudit correcteur 2 lorsque cet organe élastique 3 est contraint ou encore déformé. Un écart présent entre la zone d'appui 5 et la deuxième zone de contact 4b définit la course de cet organe élastique 3 lors de sa compression ou déformation. Cet organe élastique 3 comprend aussi une extrémité de liaison 7 le reliant mécaniquement à la partie rigide 6 de la première partie 14a dudit correcteur 2. On notera que cette extrémité de liaison 7 est le seul lien mécanique entre l'organe élastique 3 et la première partie 14a du correcteur 2

L'extrémité de fixation 8b de ce correcteur 2 comprend une zone de liaison 9 reliée mécaniquement au ressort de correcteur ou encore agencée en appui simple sur ce ressort. On comprend qu'une telle zone de liaison 9 peut être définie ailleurs dans le correcteur 2 par exemple dans la première partie 14a de ce dernier. Cette zone de liaison 9 peut comprendre une ouverture taraudée susceptible de coopérer avec une vis afin de participer à cette liaison mécanique entre ce ressort et le correcteur 2. Dans cette configuration, le ressort de correcteur est un ressort à lame dont une extrémité est fixée à la boite de la pièce d'horlogerie 200 notamment sur une platine de cette boite, et une autre extrémité de ce ressort est reliée mécaniquement ou en appui simple à la zone de liaison 9 du correcteur 2. Dans une phase dite de repos du mécanisme de correction 1, ce ressort maintien le correcteur 2 dans une position dans laquelle l'extrémité flexible du correcteur 2 n'est pas engagée dans des dents 17 de la roue dentée 11. Dans une autre phase dite d'activation du mécanisme de correction 1, ce ressort est alors contraint sous l'action d'un déplacement du correcteur 2 autour de l'axe de rotation A1 résultant de l'actionnement du poussoir par l'utilisateur de la pièce d'horlogerie 200.

On notera que ce mécanisme de correction 1 comprend également deux butées permettant de limiter la course du correcteur 2 lors de son déplacement autour de l'axe de rotation A1. Plus précisément, il comprend une butée initiale sur laquelle repose le correcteur 2 lorsque ce dernier est dans sa position initiale de butée lors de la phase de repos du mécanisme 1 et une butée finale lorsqu'il est dans sa position finale de butée lors de la phase d'activation du mécanisme 1. On notera que cette course du correcteur 2 peut également être appelée par la suite « course de déplacement » ou « course de correction » ou encore « course maximale de correction ».

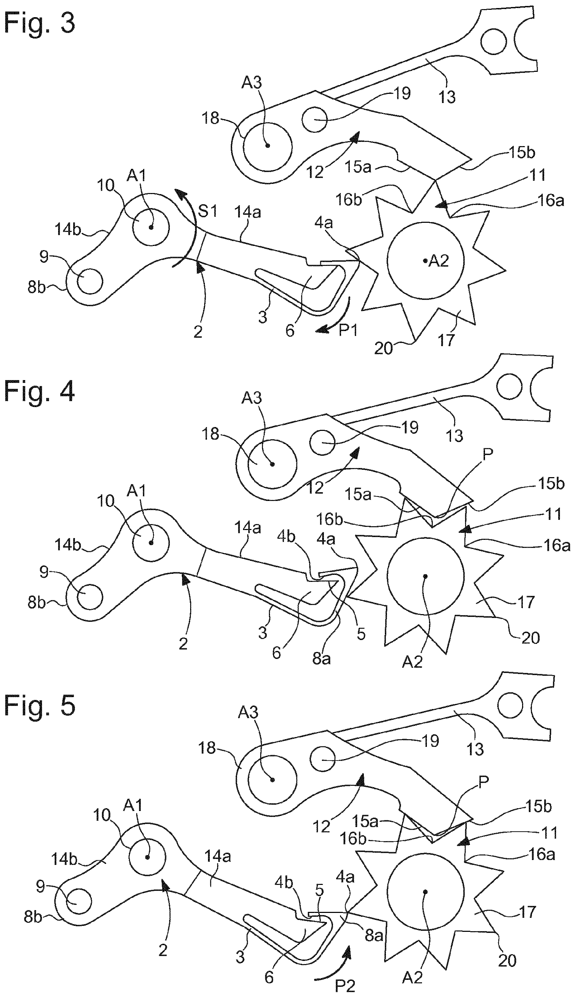

Dans ce mécanisme de correction 1, le sautoir 12 est destiné à bloquer la roue dentée 11 en dehors de phases de correction d'une ou de plusieurs fonctions du mouvement 201. Ce sautoir 12 est aussi monté mobile en rotation autour d'un axe de rotation A3 sur la platine de cette pièce d'horlogerie 200. Un tel sautoir 12 comprend une extrémité libre pourvue de première et deuxième pentes 15a, 15b (visibles sur la figure 3) formant un angle obtus en une pointe P de ce sautoir 12. Cette extrémité libre est notamment prévue pour être disposée dans un creux 16a, 16b défini entre deux dents 17 consécutives de la roue dentée 11 avec les pentes 15a, 15b en contact avec ces dents 17 et ce, afin de maintenir cette roue dentée 11 dans une position indexée. Ce sautoir 12 comprend également une extrémité de fixation pourvue d'une ouverture 18 qui est susceptible d'être traversée par une vis dont une extrémité filetée est apte à coopérer avec un orifice taraudé de la platine. Ainsi ce sautoir 12 est donc mobile en déplacement par rapport à l'axe de rotation A3 perpendiculaire à cette ouverture 18 définie dans cette extrémité de fixation du sautoir 12.

Le sautoir 12 est également pourvu d'une zone de support 19 faisant saillie d'une des deux faces latérales de ce sautoir 12 et qui est apte à coopérer avec le ressort de sautoir 13. Cette zone de support 19 est située entre l'ouverture 18 définie dans l'extrémité de fixation et l'extrémité libre du sautoir 12 en étant localisée plus proche de cette ouverture 18 que de l'extrémité libre. Le ressort de sautoir 13 est un ressort à lame dont une extrémité est fixée sur la platine de la pièce d'horlogerie 200, et une autre extrémité est apte à prendre appui sur la zone de support 19 de ce sautoir 12. Dans la phase de repos du mécanisme de correction 1, ce ressort 13 maintient le sautoir 12 dans une position dans laquelle l'extrémité libre du sautoir 12 est engagée dans le creux 16a, 16b défini entre des dents 17 consécutives de la roue dentée 11 de manière à bloquer cette roue dentée 11 en dehors de phases de correction d'une ou de plusieurs fonctions du mouvement 201 et en dehors des phases de fonctionnement normal du mécanisme. Dans la phase d'activation du mécanisme de correction 1, ce ressort 13 est alors contraint sous l'action d'un déplacement du sautoir 12 autour de l'axe de rotation A3 résultant du déplacement du correcteur 2 suite à l'actionnement du poussoir.

Un tel mécanisme de correction 1 est apte à mettre en œuvre un procédé de correction d'une fonction du mouvement 201 de la pièce d'horlogerie 200.

Un tel procédé comprend une étape de configuration du mécanisme de correction 1 dans une phase d'activation lors de laquelle la roue dentée 11 est paramétrée dans une position indexée de correction. Dans cette position indexée de correction, la roue est alors apte à mettre à jour le mécanisme d'affichage avec lequel elle coopère et qui participe à la diffusion de la fonction d'affichage corrigée du mouvement 201.

Lors de cette étape, le poussoir est actionné en passant d'une position de repos à une position d'activation afin d'agir sur le correcteur 2 et de provoquer ainsi son déplacement dans le premier sens S1 autour de l'axe de rotation A1. Durant ce déplacement du correcteur 2, l'organe élastique 3 constituant son extrémité flexible, entre alors en contact avec une dent 17 de la roue dentée 11 afin de transmettre à cette dernière ce déplacement dans l'optique de l'entrainer dans un mouvement de rotation autour d'un axe de rotation A2. Plus précisément, en référence à la figure 3, lors de cette transmission de déplacement, l'organe élastique 3 en étant ainsi en contact avec cette dent 17, se déforme dans un premier sens P1 jusqu'à ce que l'écart compris entre la zone d'appui 5 et la deuxième zone de contact 4b soit nul. Autrement dit, l'organe élastique 3 vient à se déformer jusqu'à ce que cette deuxième zone de contact 4b vienne en butée sur la zone d'appui 5 de la partie rigide 6 de la première partie 14a du correcteur 2. On notera que dans ce mécanisme 1, le couple appliqué par l'organe élastique 3 à la roue dentée 11 est inférieur au couple de maintien appliqué à la roue dentée 11 par le sautoir 12.

Ainsi, dès lors que cette deuxième zone de contact 4b est en butée contre la zone d'appui 5, le correcteur 2 entraîne alors la roue dentée 11 dans un mouvement de rotation autour de l'axe de rotation A2 et ce, jusqu'à ce que le correcteur 2 vienne en appui sur la butée finale qui définit sa fin de course. Lors de ce mouvement de rotation de la roue dentée 11, le sautoir 12 qui est en contact avec les dents 17 de cette roue 11, effectue également un mouvement de rotation autour de l'axe de rotation A3 en engendrant une déformation du ressort de sautoir 13 et ce, jusqu'à ce que sa pointe P soit positionnée de l'autre côté du sommet 20 de la dent 17 de la roue dentée 11 délimitant le premier creux 16a où était initialement situé ce sautoir 12 d'un deuxième creux 16b consécutif de la roue 11 dans lequel ce sautoir 12 est alors disposé et finalise la fonction corrigée c'est-à-dire verrouille cette roue dentée 11 dans une position indexée finale de correction. De préférence, la position finale de butée du correcteur 2 permet d'amener cette dent 17 comprise entre ces premier et deuxième creux 16a, 16b, et notamment son sommet 20, sur la deuxième pente 15b du sautoir. Ainsi, dans ce mécanisme 1, la course du correcteur 2 est donc spécifiquement définie pour assurer un déplacement de la roue dentée 11 de manière à engendrer le passage de l'extrémité libre du sautoir 12 du premier creux 16a vers le deuxième creux 16b. A l'issue de cette course du correcteur 2 notamment lorsque sa première zone de contact 4a n'est plus en contact avec la dent 17, l'organe élastique 3 se détend de sorte à recouvrir sa forme initiale. On comprend donc dans ce contexte que lors du passage du correcteur 2 de sa position initiale de butée vers sa position finale de butée ce dernier actionne la roue dentée de manière à ce que le sommet 20 de cette dent 17 se déplace d'abord sur tout ou partie de la première pente 15a ensuite sur la pointe P de ce sautoir 12 et enfin sur tout ou partie de la deuxième pente 15b.

Ce procédé comprend ensuite une étape de configuration du mécanisme de correction 1 dans une phase de repos. Lorsque le correcteur 2 est ainsi en appui sur la butée finale, le poussoir est alors agencé dans sa position de repos en étant relâché par l'utilisateur de la pièce d'horlogerie 200. Dans ce contexte, le correcteur 2 retrouve alors sa position initiale sous l'action d'une force de rappel exercée sur ce dernier par le ressort de correcteur qui est apte à l'entrainer dans un déplacement dans le deuxième sens S2 autour de l'axe de rotation A1. Ce deuxième sens S2 est contraire au premier sens S1. Ce déplacement du correcteur 2 n'a aucun effet sur la position indexée de correction de la roue dentée 11. En effet, lorsque le correcteur 2 retourne vers sa position initiale, l'organe élastique 3 entre en contact au niveau de sa première zone de contact 4a avec une dent 17 de la roue dentée 11 et se déforme alors dans un deuxième sens P2 opposé au premier sens P1 et ce, sans entrainer cette roue dentée 11 dans un déplacement autour de l'axe de rotation A2. On notera que dans ce mécanisme 1, le couple appliqué par l'organe élastique 3 à la roue dentée 11 est inférieur au couple de maintien appliqué à la roue dentée 11 par le sautoir 12. Dans ce contexte, la figure 5 illustre une déformation maximale de cet organe élastique 3 lorsque ce dernier est en contact avec un sommet 20 de la dent 17. On remarquera que lors de cette déformation, l'écart compris entre la zone d'appui 5 et la deuxième zone de contact 4b diminue mais ne devient jamais nul. Autrement dit, l'organe élastique 3 vient à se déformer sans que la deuxième zone de contact 4b vienne en butée sur la zone d'appui 5 de la partie rigide 6 de la première partie 14a du correcteur 2. En complément, on notera que cet organe élastique 3 est apte se déformer dans les premier et deuxième sens de déformation P1, P2 qui sont sensiblement parallèles ou parallèles aux premier et deuxième sens de déplacement S1, S2 du correcteur 2.

On notera, que le correcteur 2 vient en appui sur la butée initiale qui définit la fin de course du correcteur 2 et ce lorsque ce dernier est configuré dans sa position initiale.

Ainsi l'invention, permet de simplifier la réalisation d'une correction d'une fonction d'un mouvement 201 d'une pièce d'horlogerie 200 notamment en augmentant la course maximale de correction en comparaison de celle des correcteurs de l'état de la technique tout en améliorant sa robustesse et ce, sans requérir l'ajout d'une pièce supplémentaire telle qu'un doigt amovible rapporté. De plus, un tel mécanisme 1 n'engendre pas d'encombrement supplémentaire dans la boite de la pièce d'horlogerie 200 et être aisément agencé dans des mouvements existant.

## Revendications

1. Correcteur (2) destiné à prendre place dans un mécanisme de correction (1) d'une fonction d'un mouvement (201) pour une pièce d'horlogerie (200) notamment d'une fonction d'affichage, ledit correcteur (2) comprenant une extrémité flexible de transmission (8a) d'un mouvement (201) et un organe élastique (3) apte à se déformer dans des premier et deuxième sens de déformation (P1, P2) qui sont opposés l'un à l'autre, ledit organe élastique (3) étant apte à se déformer dans des premier et deuxième sens de déformation (P1, P2) qui sont sensiblement parallèles ou parallèles aux premier et deuxième sens de déplacement (S1, S2) du correcteur (2), un tel organe élastique (3) comprenant :
- une première zone de contact (4a) définie sur une surface extérieure dudit organe élastique (3) qui est prévue pour transmettre un mouvement (201) à une pièce horlogère (11) du mécanisme de correction (1) lorsque le correcteur (2) est animé d'un mouvement dans un premier sens de déplacement (S1) ;
- une deuxième zone de contact (4b) définie sur une surface intérieure dudit organe élastique (3) qui est prévue pour venir en butée contre une zone d'appui (5) comprise dans une partie rigide (6) dudit correcteur (2) lorsque cet organe élastique (3) est contraint, **caractérisé en ce que** ledit correcteur comprend un écart présent entre la zone d'appui (5) et la deuxième zone de contact (4b) définissant la course de cet organe élastique (3) lors de sa compression ou déformation.

2. Correcteur (2) selon la revendication précédente, **caractérisé en ce que** ledit organe élastique (3) est relié mécaniquement à une première partie (14a) du correcteur (2) uniquement en son extrémité de liaison (7).

3. Correcteur (2) selon l'une quelconque des revendications précédentes, **caractérisé en ce qu'**il comprend une extrémité de fixation (8b) pourvue d'une zone de liaison (9) reliée mécaniquement à un ressort de correcteur du mécanisme de correction (1) ou encore en appui simple sur ce ressort.

4. Correcteur (2) selon l'une quelconque des revendications précédentes, **caractérisé en ce qu'**il comprend une zone de montage (10) traversée par un axe de rotation (A1) autour duquel le correcteur (2) est apte à se déplacer dans des premier et deuxième sens de déplacement (S1, S2).

5. Mécanisme de correction (1) d'une fonction d'un mouvement (201) pour une pièce d'horlogerie (200) notamment d'une fonction d'affichage, comprenant un correcteur (2) selon l'une des revendications 1 à 4, et au moins une pièce horlogère (11) notamment une roue dentée, ladite pièce horlogère (11) étant susceptible d'être animée d'un mouvement en coopérant avec une extrémité flexible de transmission (8a) d'un mouvement du correcteur (2).

6. Mécanisme de correction (1) selon la revendication précédente **caractérisé en ce qu'**il comprend un sautoir (12) apte à maintenir la pièce horlogère (11) dans une position indexée.

7. Mouvement (201) pour une pièce d'horlogerie (200) comportant au moins un mécanisme de correction (1) selon la revendication précédente.

8. Pièce d'horlogerie (200) comprenant un mouvement (201) selon la revendication précédente.

## Patentansprüche

1. Korrektor (2), der dazu ausgelegt ist, in einen Korrekturmechanismus (1) einer Funktion eines Uhrwerks (201) für ein Zeitmessgerät (200) eingepasst zu werden, insbesondere einer Anzeigefunktion, wobei der Korrektor (2) ein flexibles Übertragungsende (8a) an einem Uhrwerk (201) und ein elastisches Organ (3) umfasst, das in einer ersten und zweiten Verformungsrichtung (P1, P2), die einander gegenüberliegen, verformbar ist, wobei das elastische Organ (3) so ausgelegt ist, dass es in einer ersten und zweiten Verformungsrichtung (P1, P2), die im Wesentlichen parallel oder parallel zu der ersten und zweiten Bewegungsrichtung (S1, S2) des Korrektors (2) sind, verformbar ist, ein solches elastisches Organ umfassend:
- einen ersten Berührungsbereich (4a), der an einer Außenfläche des elastischen Organs (3) definiert ist, das so ausgelegt ist, dass es ein Uhrwerk (201) auf ein Uhrmachereiteil (11) an dem Korrekturmechanismus (1) überträgt, wenn der Korrektor (2) durch ein Uhrwerk in einer ersten Bewegungsrichtung (S1) angetrieben wird;
- einen zweiten Berührungsbereich (4b), der an einer Innenfläche des elastischen Organs (3) definiert ist, das so ausgelegt ist, dass es gegen einen Lagerbereich (5) anschlägt, der in einem starren Teil (6) des Korrektors (2) enthalten ist, wenn dieses elastische Organ (3) belastet wird, **dadurch gekennzeichnet, dass** der Korrektor eine Trennung zwischen dem Lagerbereich (5) und dem zweiten Berührungsbereich (4b) umfasst, der den Weg dieses elastischen Organs (3) definiert, wenn es zusammengedrückt oder verformt ist.

2. Korrektor (2) nach dem vorhergehenden Anspruch, **dadurch gekennzeichnet, dass** das elastische Organ (3) nur an seinem Verbindungsende (7) mechanisch mit einem ersten Teil (14a) des Korrektors (2) verbunden ist.

3. Korrektor (2) nach einem der vorhergehenden Ansprüche, **dadurch gekennzeichnet, dass** er ein Befestigungsende (8b) aufweist, das mit einem Verbindungsbereich (9) bereitgestellt ist, der mechanisch mit einer Korrektorfeder an dem Korrekturmechanismus (1) verbunden ist oder sogar gegen diese Feder drückt.

4. Korrektor (2) nach einem der vorhergehenden Ansprüche, **dadurch gekennzeichnet, dass** er einen Einpassungsbereich (10) umfasst, der von einer Drehachse (A1) durchquert wird, um die sich der Korrektor (2) in einer ersten und zweiten Bewegungsrichtung (S1, S2) bewegen kann.

5. Korrekturmechanismus (1) für eine Funktion eines Uhrwerks (201) für ein Zeitmessgerät (200), insbesondere eine Anzeigefunktion, umfassend einen Korrektor (2) nach einem der Ansprüche 1 und 4, und mindestens ein Uhrmachereiteil (11), insbesondere ein Zahnrad, bei dem das Uhrmachereiteil (11) durch einen Eingriff mit einem flexiblen Übertragungsende (8a) an einem Uhrwerk des Korrektors (2) durch ein Uhrwerk antreibbar ist.

6. Korrekturmechanismus (1) nach dem vorhergehenden Anspruch, **dadurch gekennzeichnet, dass** er eine Sperre (12) umfasst, die in der Lage ist, das Uhrmachereiteil (11) in einer indexierten Position zu halten.

7. Uhrwerk (201) für ein Zeitmessgerät (200), das mindestens einen Korrekturmechanismus (1) nach dem vorhergehenden Anspruch umfasst.

8. Zeitmessgerät (200), umfassend ein Uhrwerk (201) nach dem vorhergehenden Anspruch.

## Claims

1. A corrector (2) designed to be fitted into a correction mechanism (1) of a function of a movement (201) for a timepiece (200), in particular a display function, said corrector (2) comprising a flexible transmission end (8a) on a movement (201) and a resilient organ (3) which can be deformed in first and second directions of deformation (P1, P2) that are opposite each other, said resilient organ (3) being designed to be deformed in first and second directions of deformation (P1, P2) that are substantially parallel or parallel to the first and second directions of movement (S1, S2) of the corrector (2), such a resilient organ comprising:
- a first contact zone (4a) defined on an outer surface of said resilient organ (3) that is designed to transmit a movement (201) to a horology part (11) on the correction mechanism (1) when the corrector (2) is driven by a movement in a first direction of movement (S1);
- a second contact zone (4b) defined on an inner surface of said resilient organ (3) that is designed to stop against a bearing zone (5) comprised in a rigid part (6) of said corrector (2) when this resilient organ (3) is stressed, **characterised in that** said corrector comprises a separation between the bearing zone (5) and the second contact zone (4b) defining the travel of this resilient organ (3) when it is compressed or distorted.

2. The corrector (2) according to the preceding claim, **characterised in that** said resilient organ (3) is mechanically connected to a first part (14a) of the corrector (2) only at its connecting end (7).

3. The corrector (2) according to any of the preceding claims, **characterised in that** it has a fastening end (8b) provided with a connecting zone (9) mechanically connected to a corrector spring on the correction mechanism (1) or even bearing against this spring.

4. The corrector (2) according to any of the preceding claims, **characterised in that** it comprises a fitting zone (10) traversed by an axis of rotation (A1) about which the corrector (2) is able to move in first and second directions of movement (S1, S2).

5. A correction mechanism (1) for a function of a movement (201) for a timepiece (200), in particular a display function, comprising a corrector (2) according to one of claims 1 and 4, and at least one horology part (11), in particular a gear wheel, in which said horology part (11) can be driven by a movement by engaging with a flexible transmission end (8a) on a movement of the corrector (2).

6. The correction mechanism (1) according to the preceding claim, **characterised in that** it comprises a jumper (12) capable of holding the horology part (11) in an indexed position.

7. A movement (201) for a timepiece (200) comprising at least one correction mechanism (1) according to the preceding claim.

8. A timepiece (200) comprising a movement (201) according to the preceding claim.
